# EUROPÄISCHE PATENTSCHRIFT

(11) **EP 1 254 331 B1**
(45) Veröffentlichungstag und Bekanntmachung des Hinweises auf die Patenterteilung: **14.01.2004**
(21) Anmeldenummer: 01919274.9
(22) Anmeldetag: 12.02.2001
(51) Int. Cl.: F16J 15/32

(54) **ROTORDICHTUNG MIT FALTENBAND**
ROTOR SEAL COMPRISING A PLEATED BAND
JOINT DE ROTOR COMPORTANT UNE BANDE PLISSEE

(30) Priorität: 12.02.2000 DE 10006298
(43) Veröffentlichungstag der Anmeldung: 06.11.2002
(73) Patentinhaber: Alstom (Switzerland) Ltd, 5401 Baden (CH)
(72) Erfinder: URLICHS, Karl, 90482 Nürnberg (DE)
(74) Vertreter: Hellwig, Tillmann, Dr.
(86) Internationale Anmeldenummer: PCT/EP2001/001539
(87) Internationale Veröffentlichungsnummer: WO 2001/059338

(56) Entgegenhaltungen:
- GB-A- 2 026 627

## Beschreibung

Die Erfindung betrifft eine Rotordichtung, insbesondere für Turbomaschinen, zum Abdichten eines zwischen einem ortsfesten Gehäuse und einem sich relativ zum Gehäuse drehenden Rotor vorhandenen Dichtspalts mit in Umfangsrichtung des Rotors hintereinander angeordneten Dichtelementen.

Eine solche Rotordichtung ist z. B. aus GB 2 026 627 A, WO 00 03 164 A1, EP 09 33 567 A2 oder der DE 44 03 605 C2 bekannt. Bei der in der DE 44 03 605 C2 beschriebenen Lamellendichtung werden die Lamellen so aus einem Bandmaterial gefaltet, dass sich die Faltkanten an Anfang und Ende der zukünftigen Lamellen befinden. Nach dem Falten wird das zieharmonikaförmig gefaltetete Bandmaterial in die gewünschte Form gebracht und das Bandmaterial an den Faltkanten aufgetrennt, so dass einzelne Lamellen entstehen, die den Dichtspalt zwischen Gehäuse und Rotor abdichten.

Nachteilig an dieser Lamellendichtung ist, wie bei allen anderen Lamellendichtungen auch, dass notwendigerweise ein Zwischenraum zwischen den einzelnen Lamellen vorhanden sein muss, um eine ausreichende Elastizität der Lamellen in radialer Richtung zu gewährleisten. Wenn diese Elastizität nicht gewährleistet ist, verschleißt die Lamellendichtung sehr schnell, wenn der Rotor, bspw. durch Wärmedehnungen, aus seiner Mittellage bezüglich der Lamellendichtung herauswandert. Außerdem kann durch die zwischen den Lamellen vorhandenen Spalten Fluid hindurchströmen, was die Dichtwirkung der Lamellendichtung reduziert.

Der Erfindung liegt die Aufgabe zu Grunde eine Rotordichtung bereitzustellen, welche ein gegenüber Lamellendichtungen verbessertes Dichtverhalten aufweist und höheren Druckbeanspruchungen standhält. Außerdem sollen Anpresskraft, Elastizität und Dichtwirkung der erfindungsgemäßen Rotordichtung auf einfache Weise an verschiedenste Anforderungen adaptierbar sein.

Mögliche Einsatzgebiete der erfindungsgemäßen Rotordichtüng sind Turbomaschinen, wie Dampfturbinen, Gastubinen, Verdichter. Die Anwendung ist der erfindungsgemäßen Rotordichtung ist jedoch nicht auf die genannten Anwendungsgebiete beschränkt.

Bei Turbomaschinen gilt es, an dem Ausgleichskolben, an den Rotoraustritten und an der Beschaufelung so zu dichten, dass trotz instationärer Temperaturdehnungen oder Rotorverlagerungen sehr kleine Dichtspalte möglich sind. Der Einsatz der erfindungsgemäßen Rotordichtung ist bei Turbomaschinen von großem Nutzen, weil deren Wirkungsgrad zunimmt, wenn trotz der dort auftretenden großen radialen Temperaturdehnungen mit kleineren Dichtspalten gearbeitet werden kann.

Diese Aufgabe wird für eine Rotordichtung, insbesondere für Turbomaschinen, zum Abdichten eines zwischen einem ortsfesten Gehäuse und einem sich relativ zum Gehäuse drehenden Rotor vorhandenen Dichtspalts mit in Umfangsrichtung des Rotors hintereinander angeordneten Dichtelementen, dadurch gelöst, dass mehrere Dichtelemente aus einem Faltenband gefaltet sind.
Dadurch, dass mehrere Lamellen aus einem Faltenband gefaltet werden, gibt es keinen Spalt mehr zwischen den Dichtelementen, so dass sich die Dichtwirkung der erfindungsgemäßen Rotordichtung gegenüber bekannten Lamellendichtungen deutlich erhöht. Die erfindungsgemäße Rotordichtung ist auch bei sehr hohen Druckdifferenzen einsetzbar, wenn die Breite, die Faltenzahl, der Anstellwinkel und die Materialstärke des Faltenbands entsprechend gewählt werden. Außerdem lässt sich die erfindungsgemäße Rotordichtung mit Faltenband leichter herstellen und leichter montieren als eine herkömmliche Lamellendichtung.

Bei der erfindungsgemäßen Rotordichtung ist der Dichtspalt unter allen Betriebsbedingungen sehr klein. Nach einem kurzzeitigen Anstreifen, z.B. wegen Rotorschwingungen oder Temperaturdehnungen, federt die erfindungsgemäße Rotordichtung wieder in die Ausgangslage zurück, ohne Schaden zu nehmen. Die Elastizität der erfindungsgemäßen Rotordichtung in radialer Richtung ist sehr groß.

In weiterer Ausgestaltung der Erfindung ist vorgesehen, dass das Bandmaterial entlang von zueinander parallelen Faltkanten gefaltet ist, und dass die Faltung an zwei benachbarten Faltkanten in entgegengesetzte Richtung erfolgt, so dass eine beliebige Anzahl von Dichtelementen durch Falten eines Faltenbands einstückig hergestellt werden kann. Dadurch lässt sich die Herstellung verschieden großer Rotordichtungen aus einem endlosen Faltenband auf einfache Weise durch Variation der Zahl der aneinandergefalteten Dichtelemente herstellen.

Bei einer Variante der Erfindung ist vorgesehen, dass die zwei zueinander parallelen Längskanten des Faltenbands und die zueinander parallelen Faltkanten einen Herstellwinkel < 90° einschließen. Der Herstellwinkel ist abhängig von Teilung und Breite der Rotordichtung. Bei dieser Ausführungsform der Erfindung verlaufen die Faltkanten in eingebauten Zustand nicht radial zur Drehachse des Rotors, sondern sind gegenüber der Oberfläche des Rotors mehr oder weniger stark geneigt.

Bei einer vorteilhaften Variante der Erfindung ist vorgesehen, dass in eingebautem Zustand die Faltkanten mit einem Radiusstrahl, der von der Rotorachse ausgeht, einen Anstellwinkel γ zwischen 10° und 70°, besonders bevorzugt zwischen 20° und 45°, einschließen, so dass die erfindungsgemäße Rotordichtung einerseits ausreichend elastisch ist, um Relativbewegungen in radialer Richtung zwischen Rotor und Gehäuse ausgleichen zu können und andererseits eine ausreichende Formstabilität aufweist, um unter sämtlichen Betriebsbedingungen zuverlässig zu dichten. Dadurch sind die Dichtelemente in radialer Richtung der Drehachse des Rotors leicht auslenkbar und können somit Relativbewegungen in radialer Richtung zwischen Rotor und Gehäuse leicht ausgleichen. Je nach Wahl des Anstellwinkels kann die Steifigkeit der erfindungsgemäßen Rotordichtung auf einfache Weise in weiten Grenzen variiert werden.

Bei dieser Ausführungsform der erfindungsgemäßen Rotordichtung verläuft die Berührlinie zwischen den Dichtelementen und dem Rotor nicht, wie bei herkömmlichen Lamellendichtungen, parallel zur Rotorachse, sondern als Zickzacklinie in Umfangsrichtung des Rotors.

In einer anderen Ausgestaltung der Erfindung ist im Bereich der Faltkanten ein Schlitz vorgesehen, wobei die Tiefe des Schlitzes kleiner als die Breite des Faltenbands ist, so dass der Zusammenhalt der Dichtelemente auch nach dem Schlitzen des Faltenbands gewährleistet ist.

Je nachdem welche Faltkanten des Faltenbands geschlitzt werden, ändert sich das Betriebsverhalten der erfindungsgemäßen Rotordichtung. Die Faltkanten liegen in eingebauten Zustand in zwei zueinander parallelen Ebenen, wobei die eine Ebene näher am Innenraum des Gehäuses mit einem gegenüber dem Umgebungsdruck erhöhten Druck liegt und die andere Ebene näher an der Außenseite des Gehäuses liegt.

Wenn die Faltkanten, die in der näher am Innenraum des Gehäuses liegenden Ebene liegen, geschlitzt werden, führt ein Druckanstieg im Innern des Gehäuses zu einem Verschließen der Schlitze, so dass die Dichtwirkung verbessert wird. Wenn die in der anderen Ebene liegenden Faltkanten geschlitzt werden, führt ein Druckanstieg im Innern des Gehäuses zu einem Öffnen der Schlitze, so dass ein Schutz gegen unzulässig hohe Drücke gegeben ist.

In weiterer Ergänzung der Erfindung weist die Rotordichtung an ihrem dem Dichtspalt abgewandten Ende einen Trägerring auf, so dass die Rotordichtung einfach mit dem Gehäuse, oder, wenn die Rotordichtung sich mit dem Rotor drehen soll, mit dem Rotor verbunden werden kann.

Bei einer weiteren Ausgestaltung der Erfindung weist der Trägerring eine Dichtlippe auf, so dass eine Sekundärleckage zwischen Trägerring und dem Gehäuse, bzw. dem Rotor, verringert bzw. ausgeschlossen wird. Diese Dichtlippe kann auch als Rastelement ausgebildet sein, so dass die erfindungsgemäße Rotordichtung in ein entsprechend geformtes Gegenstück des Gehäuses oder des Rotors eingerastet werden kann.

In weiterer Ergänzung der Erfindung ist vorgesehen, dass das Bandmaterial aus einem metallischen Werkstoff besteht, und/oder dass das Bandmaterial im Bereich der Faltkanten plastisch verformbar ist und dass das Bandmaterial ansonsten federelastisch ist, so dass die Rotordichtung über einen weiten Temperaturbereich einsetzbar ist, eine hohe Beständigkeit gegenüber Temperaturen und Drücken aufweist und außerdem eine hohe Lebensdauer hat.

Zur Erleichterung des Faltens kann das Faltenband im Bereich der Faltkanten weichgeglüht werden.

Das Faltenband kann in gefaltetem Zustand kraftschlüssig, formschlüssig oder stoffschlüssig mit einem Dichtungsträger verbunden sein. Der Dichtungsträger wiederum ist auf einfache Weise mit dem Gehäuse oder, falls die Rotordichtung umlaufen soll, mit dem Rotor verbindbar. Je nach Anforderungen an die Rotordichtung kann somit eine optimale Verbindung zwischen Faltenband und Dichtungsträger erreicht werden.

Bei einer besonders vorteilhaften Ausgestaltung der Erfindung ist im Bereich der Faltkanten eine Ausnehmung vorgesehen, wobei die Ausnehmung mit einer entsprechend geformten Ringnut eines Dichtungsträgers formschlüssig verbindbar ist, so dass die Dichtelemente in die Ringnut in deren Längsrichtung eingeschoben werden können und durch den Formschluss eine radiale Bewegung der Dichtelemente relativ zum Dichtungsträger verhindert wird.

Zur weiteren Vereinfachung der Montage der Dichtelemente kann der Dichtungsträger mehrteilig ausgeführt sein.

Zur weiteren Vereinfachung der Montage kann auch vorgesehen sein, dass Teilungsebene des Dichtungsträgers im wesntlichen parallel zu den Faltkanten im Bereich der Teilungsebene verläuft.

Bei einer vorteilhaften Ausführung der Erfindung ist der Dichtungsträger am Gehäuse befestigt, so dass die Rotordichtung lediglich Druckbeanspruchungen ausgesetzt ist.

Bei einer anderen Ausgestaltung der Erfindung ist der Dichtungsträger am Rotor befestigt, so dass die Dichtelemente auch Fliehkräften ausgesetzt sind. Dieser Effekt kann dazu genutzt werden, den Abstand zwischen Dichtelementen und der Dichtfläche am Gehäuse drehzahlabhängig zu gestalten. Dies ist insbesondere dann von Vorteil, wenn der Abstand beim Durchfahren kritischer Drehzahl noch groß genug ist, um übermäßigen Verschleiß der Dichtelemente zu verhindern und beim Erreichen der Betriebsdrehzahl der Abstand sich so weit verringert hat, dass eine optimale Dichtwirkung erzielt wird.

Eine besonders montagefreundliche Variante der Erfindung ist dadurch gekennzeichnet, dass die Rotordichtung aus mehreren Segmenten besteht und dass jedes Segment aus einem Faltenband gefaltet ist. Mit dieser Ausführungsform können auch sehr große Rotordichtungen hergestellt werden.

Weitere Vorteile und vorteilhafte Ausgestaltungen der Erfindung sind der nachfolgenden Zeichnung und deren Beschreibung entnehmbar. Es zeigen:
- Fig. 1: einen Querschnitt durch ein Turbinengehäuse,
- Fig. 2: eine Einzelheit II aus Fig. 1 in einem größeren Maßstab,
- Fig. 3: eine Darstellung des Faltvorganges beim Einbau eines erfindungsgemäßen Faltenbandes,
- Fig. 4: eine erste Ausführungsform eines Faltenbandes,
- Fig. 5: eine zweite Ausführungsform eines Faltenbandes,
- Fig. 6: verschiedene Aufnahmequerschnitte für die Lamellen,
- Fig. 7: einen Teilbereich eines geteilten Dichtungsträgers,
- Fig. 8: eine Anordnung von Lamellen in Achsrichtung des Dichtungsträgers betrachtet,
- Fig. 8a: einen Schnitt entlang der Linie VIII - VIII der Fig. 8,
- Fig. 9: eine gegenüber der Fig. 8a andere Anordnung der Lamellen und
- Fig. 10: ein weiteres Ausführungsbeispiel einer erfindungsgemäßen Rotordichtung.

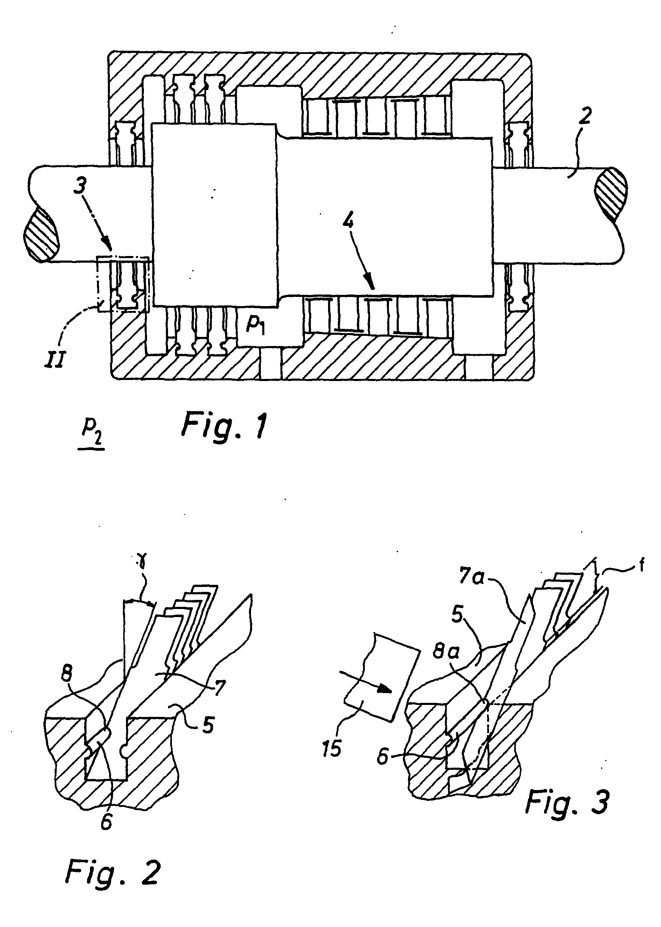

Fig. 1 zeigt in einen Querschnitt durch ein Turbinengehäuse 1 verschiedene gegenüber einem Rotor 2 wirkende Dichtungen 3 und 4. Unter dem Begriff "Rotor" werden im Zusammenhang mit der Erfindung alle Bauteile verstanden, die sich relativ zu einem Gehäuse oder einer Lagerung drehen. Im Gehäuseinneren herrscht ein Innendruck p₁, außerhalb des Turbinengehäuses 1 herrscht der Umgebungsdruck p₂. Die Druckdifferenz p₁ - p₂ verursacht Leckagen zwischen Gehäuseinnerem und Umgebung.

In der Fig. 2, die in einem größeren Maßstab und in perspektivischer Darstellung eine Einzelheit II der Fig.1 zeigt, dient als Dichtungsträger 5 eine in das Turbinengehäuse 1 eingebrachte Ringnut, die an ihren gegenüberliegenden Wänden je einen konturierten Vorsprung 6 besitzt. Eine Vielzahl von einzelnen aus ca. 0,04 bis 0,1 mm dicken Blechen bestehenden Lamellen 7 sind in der Ringnut des Dichtungsträgers 5 aufgeschichtet. Die Lamellen 7 sind über mit den Vorsprüngen 6 zusammenwirkende Kerben 8 formschlüssig mit dem Dichtungsträger 5 verbunden.

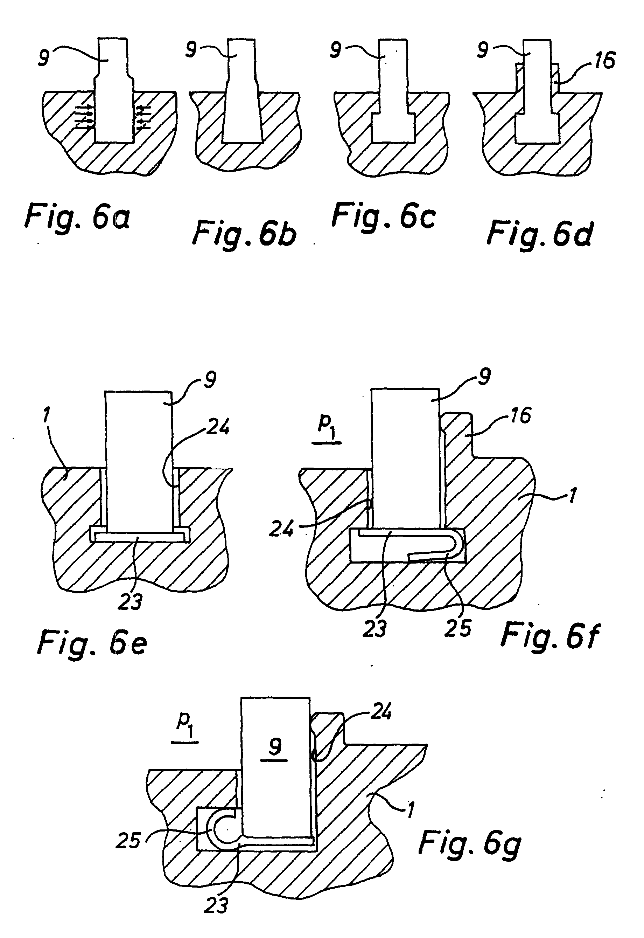

Die Lamellen sind unter einem Anstellwinkel γ von ca. 45° zur Normalen auf der Längsachse der Ringnut geneigt eingesetzt. Andere Formen der Querschnitte von Dichtungsträgern sind den Fig. 6a bis 6d zu entnehmen.

Die Befestigung eines erfindungsgemäßen Faltenbandes 9 am Turbinengehäuse 1 ist grundsätzlich völlig frei. Sie sollte möglichst elastisch und druckdicht sein. Die radiale Befestigung erfolgt bei einer rechteckförmigen Ringnut nach Fig. 6a durch Einstauchen oder durch die Form einer konischen Nut nach Fig. 6b bzw. einer konturierten Nut nach Fig. 6c und Fig. 6d.

In einer weiteren Ausführungsform gemäß Fig. 6e wird das Faltenband 9 auf einen Trägerring 23 gelötet, geschweißt oder formschlüssig verbunden. Der Trägerring 23 läßt sich nun sehr einfach in einer Ringnut 24 des Turbinengehäuses 1 verankern.

Günstige Lösungen erzielt man, wenn den Trägerring 23 gemäß Fig. 6f als Dichtung mit einer Dichtlippe 25 ausgebildet ist. Die Dichtlippe 25 kann so ausgeführt sein, daß sie sich unter dem anstehenden Druck p₁ aufweitet und sich somit die Dichtwirkung verbessert. Bei einer solchen Variante, die für hohe Druckdifferenzen besonders geeignet ist, kann das Faltenband 9 durch einen Stützsteg 16 abgestützt werden. Dadurch kann insbesondere erreicht werden, daß die Spannungen an der Befestigungsstelle des Faltenbandes 9 am Trägerring 23 minimiert werden. In einer weiteren Variante gemäß Fig. 6g wird eine Verformung des Trägerrings 23 im Betrieb verhindert.

Man kann das Faltenband 9 mit Trägerring 23 aber auch radial in die Ringnut 24 einbringen und dort in einem Absatz verrasten. Hierzu bietet sich besonders das Ausführungsbeispiel gemäß Fig. 6f oder 6g mit integrierter Dichtlippe 25, da die Dichtlippe 25 als Rastnase wirken kann und der Trägerring 23 mit der Ringnut 24 verrastbar ist.

Damit nicht jede Lamelle 7 einzeln gefertigt werden muß und die Handhabung beim Einbau einfacher wird, sind gemäß Fig. 3 mehrere Lamellen 7a aus einem Faltenband 9 gefertigt.

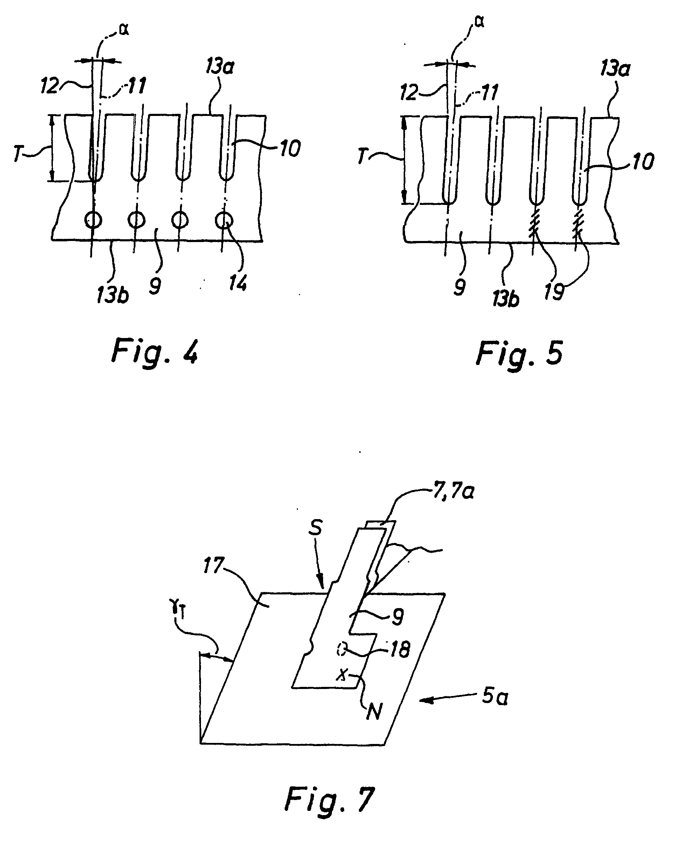

Anhand der in Figur 4 und 5 dargestellten Ausführungsbeispiele wird nachfolgend der Aufbau des Faltenbandes 9 beschrieben. Das Faltenband 9 weist zwei zueinander parallele Längskanten 13a und 13b auf. Unter einem nachfolgend als Herstellwinkel β bezeichneten Winkel (nicht dargestellt) laufen mehrere Faltkanten 11 über das Faltenband. Der Winkel α stellt den Ergänzungswinkel zwischen dem Herstellwinkel β (nicht dargestellt) und einer Normalen 12 auf den Längskanten 13a und 13b dar. Die Wahl des optimalen Herstellwinkels β hängt u. a. von der Teilung des Faltenbands 9 ab. Durch die Wahl des Herstellwinkels β kann das Betriebsverhalten der Rotordichtung 7a auf einfache Weise eingestellt werden.

Auf jeder Faltkante 11 ist in einem vorgebbaren Abstand zur Längskante 13b des Faltenbandes 9 jeweils eine Bohrung 14 eingebracht. Anstelle der dargestellten runden Bohrung können auch andere Aussparungen mit beliebiger Kontur gewählt werden.

Das Faltenband 9 wird entlang der Faltkanten 11 jeweils in gegenläufiger Richtung mit einem mit 15 angedeuteten Stemmwerkzeug unmittelbar in die Ringnut des Dichtungsträgers 5 (siehe Fig. 3) eingefaltet. Nach dem Falten bilden die Bohrungen 14 eine nahezu halbkreisförmige Aussparung 8a, die in den entsprechend geformten Vorsprung 6 des Dichtungsträgers 5 eingreift. Die Faltung kann auch außerhalb des Dichtungsträgers 5 erfolgen und die aus dem Faltenband 9 gebildete Rotordichtung 7a anschließend in die Ringnut der Dichtungsträgers 5 in gefaltetem Zustand eingebracht werden. Vorzugsweise wird die Faltung jedoch direkt während des Einbaus mit einem Stemmwerkzeug 15 durchgeführt.

Nach dem Einbau der Rotordichtung 7a können im Bereich der Faltkanten 11 keine Sekundärleckagen auftreten, so daß ein in der Fig. 6d angedeuteter Stützsteg 16 nicht erforderlich ist.

Bei dem Ausführungsbeispiel gemäß Fig. 4 ist das Faltenband 9 mit Schlitzen 10 im Bereich der Faltkanten 11 versehen. Die Längsachsen der Schlitze 10 und der Faltkanten 11 verlaufen parallel. Wenn, wie in Fig. 4 dargestellt, im Bereich jeder Faltkante 11 ein Schlitz 10 vorgesehen ist, entspricht das Betriebsverhalten der erfindungsgemäßen Rotordichtung 7a (siehe Fig. 2) weitgehend dem einer herkömmlichen Lamellendichtung. Wenn nicht bei jeder Faltkante 11 ein Schlitz 10 vorgesehen wird, kann das Betriebsverhalten der erfindungsgemäßen Rotordichtung weiter beeinflußt werden.

Wenn beispielsweise nur bei jeder zweiten Faltkante 11 ein Schlitz 10 vorgesehen ist, dann kann durch den Einbau der Rotordichtung 7a in das Turbinengehäuse 1 das Betriebsverhalten weiter beeinflußt werden. Wenn nämlich die Rotordichtung 7a so eingebaut wird, dass die Schlitze 10 in Richtung des höheren Drucks zeigen, bewirken die Druckkräfte mit zunehmender Druckdifferenz p₁ - p₂ eine Verschließen der Breite der Schlitze 10. Andernfalls, wenn die Rotordichtung 7a so eingebaut wird, dass die Schlitze 10 in Richtung des geringeren Drucks zeigen, bewirken die Druckkräfte mit zunehmender Druckdifferenz p₁ - p₂ ein Öffnen der Schlitze 10, so dass die Dichtung nicht durch Überdrücke zerstört werden kann.

Ein weiterer Vorteil der Faltung besteht darin, daß, abhängig von der Länge T der Schlitze 10 (siehe Fig. 4) des Faltenbands 9 und dessen Materialstärke, die Steifigkeit konstruktiv beeinflußt werden kann. Ferner wird durch das Falten ein bestimmter Mindestspalt zwischen den Einzelblechen garantiert. Bei der Montage des Faltenbands 9 in einer Ringnut des Dichtungsträgers 5 wird von allein eine radiale Fächerung erzeugt.

In Fig. 5 ist ein weiteres Ausführungsbeispiel eines erfindungsgemäßen Faltenbandes 9 dargestellt. Die Tiefe T der Schlitze 10 ist so gewählt, dass eine Bohrung 14 wie bei dem Ausführungsbeispiel gemäß Fig. 4 nicht erforderlich ist. Das Faltenband 9 wird bei diesem Ausführungsbeispiel mit dem Grund des Schlitzes 10 an dem Vorsprung 6 der Ringnut des Dichtungsträgers arretiert. Bei diesem Ausführungsbeispiel ist möglicherweise ein Stützsteg 16 nach Fig. 6d erforderlich, um eine Sekundärleckage zu vermeiden. In Fig. 5 ist eine durch Wärmebehandlung erzielte weiche Materialzone 19 im Bereich der Faltkanten 11 angedeutet, die das Falten des Faltenbandes 9 erleichtert.

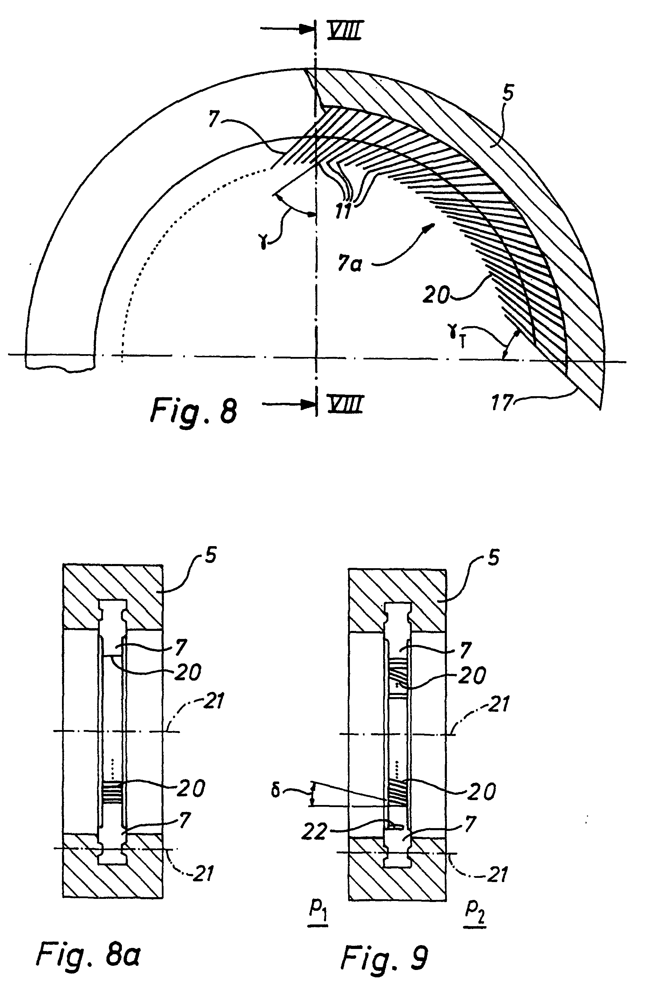

Zum Einbau des Faltenbandes 9 in einer Ringnut ist dieselbe mit einer nicht dargestellten lokalen Erweiterung versehen. Wie in der Fig. 7 angedeutet, ist beim Einbau in einen geteilten Dichtungsträger 5a die Teilfläche 17 unter einem Winkel γ_{T} zu einer Normalen auf die Längsachse der Ringnut geneigt. Dieser Winkel γ_{T} entspricht in etwa dem in Fig. 2 angedeuteten Anstellwinkel γ. Im Bereich der Teilfläche 17 kann das gefaltete Faltenband 9 gegen Herausfallen durch eine Lamelle 7b mit einem in Umfangsrichtung eingehängten Überhang N erzielt werden, wobei der Überhang N durch einen in die Teilfläche eingebrachten Niet 18 gesichert ist. Möglich ist auch eine Sicherung (nicht dargestellt) durch einen Schweißpunkt, eine lokale Stauchung des Nutbereichs, einen Kerbstift oder eine Schraube.

Fig. 8 zeigt die fächerartige Anordnung der Faltkanten 11 in dem geteilten Dichtungsträger 5 mit einem Anstellwinkel γ von 45°. Der Winkel γ_{T} der Teilfläche 17 entspricht bei diesem Ausführungsbeispiel dem Anstellwinkel γ der Faltkanten 11.

Wie aus der Fig. 8a zu erkennen ist, verlaufen die dem nicht dargestellten Rotor zugewandten Stirnseiten 20 der Lamellen parallel zur Rotorachse 21.

Eine weitere Verbesserung des Dichtverhaltens wird durch den in Fig. 9 gezeigten leicht geneigten Einbau der Lamellen erzielt. Die Neigung wird durch den Neigungswinkel δ zwischen Rotorachse 21 und Stirnseiten 20 der Rotordichtung 7a beschrieben. Bei dem Ausführungsbeispiel gemäß Fig. 9 beträgt der Neigungswinkel δ etwa 10° bis 20°. Der Neigungswinkel δ ist jedoch nicht auf diesen Winkelbereich beschränkt.

Durch die Neigung der Stirnseiten 20 lässt sich der bei Bürstendichtungen bekannte Effekt erzielen, dass sich die Lamellen 7 infolge der Druckdifferenz p₁ - p₂ und infolge von Impulskräften aneinander legen. Dies kann auch durch einen Querschlitz 22 in den Lamellen 7 gefördert werden.

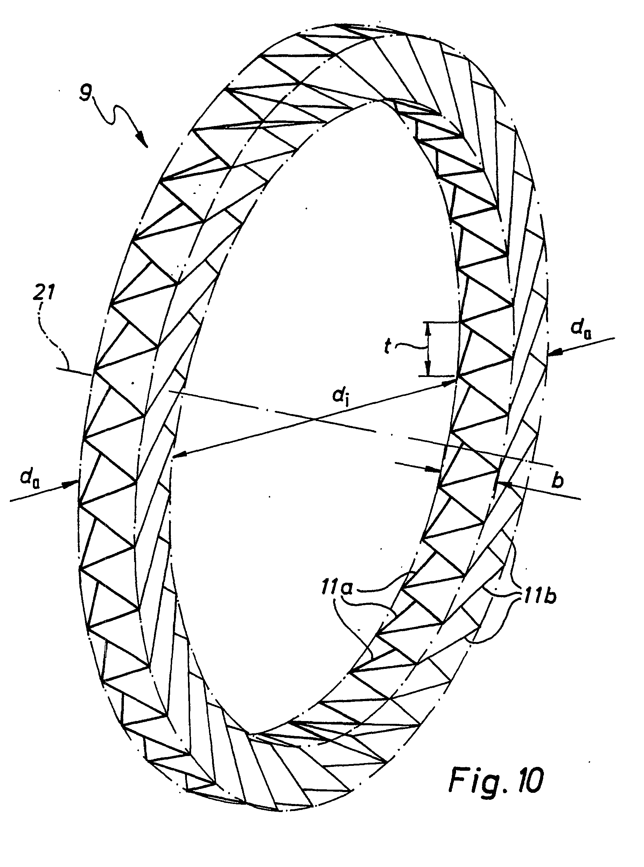

In Fig. 10 ist ein weiteres Ausführungsbeispiel einer erfindungsgemäßen Rotordichtung perspektivisch dargestellt. In dieser Darstellung ist gut zu erkennen, dass die Faltkanten 11a in einer Ebene liegen, die senkrecht zur Rotorachse 21 verläuft. Die Faltkanten 11b liegen ebenfalls in einer Ebene, die senkrecht zur Rotorachse 21 verläuft. Beide Ebenen verlaufen mit einem Abstand, der der Breite b des Faltenbandes 9 entspricht, parallel zueinander.

Wenn das Faltenband 9 am Turbinengehäuse 1 (nicht dargestellt) angebracht wird, wird es durch Fliehkräfte nicht zusätzlich beansprucht und verformt. Am inneren Durchmesser dᵢ ist das Faltenband 9 in radialer Richtung elastisch. Anseinem Außendurchmesser dₐ wird das Faltenband 9 dichtend mit einem nicht dargestellten Turbinengehäuse verbunden. Der Anstellwinkel γ, der sich wegen der perspektivischen Darstellung in Fig. 10 nicht einzeichnen läßt, bestimmt die Steifigkeit des Faltenbandes 9 in radialer Richtung mit.

Es kann vorteilhaft sein, wenn die Breite b etwas größer als die am Innendurchmesser dᵢ gemessene Teilung t. Die freie Höhe des Faltenbandes wird durch die erforderliche radiale Elastizität bestimmt.

Schließlich ist noch zu erwähnen, daß das Faltenband 9 in gleicher Weise auch axial wirkend angewendet werden kann. Außerdem ist es für einige Situationen aufgrund geringer Fliehkraftwirkung, zulässig das Faltenband 9 auf dem Rotor 2 zu befestigen. Das kann sogar erwünscht sein, wenn es darum geht, die Fliehkraftwirkung auf das Faltenband 9 derart auszunutzen, daß sich die endgültige Spaltweite erst bei voller Drehzahl einstellt. Damit hätte man die Option, beim Anfahren einer Turbomaschine und beim Durchfahren der kritischen Drehzahl größere Spaltweiten zu haben, was wiederum die Betriebssicherheit deutlich erhöht.

Alle in der Beschreibung, der Zeichnung und den Patentansprüchen offenbarten Merkmale können sowohl einzeln als auch in beliebiger Kombination miteinander erfindungswesentlich sein.

## Patentansprüche

1. Rotordichtung, insbesondere für Turbomaschinen, zum Abdichten eines zwischen einem ortsfesten Gehäuse (1) und einem sich relativ zum Gehäuse (1) drehenden Rotor (2) vorhandenen Dichtspalt mit in Umfangsrichtung des Rotors (2) hinereineinander angeordneten Dichtelementen, **dadurch gekennzeichnet, dass** mehrere Dichtelemente (7) aus einem Faltenband (9) gefaltet sind, dass beim Falten Faltkanten (11) enstehen, und dass die Faltkanten (11) in eingebauten Zustand des Faltenbands (9) in einer senkrecht zur einer Rotorachse (21) liegenden Ebene verlaufen.

2. Rotordichtung nach Anspruch 1, **dadurch gekennzeichnet, dass** das Faltenband (9) zwei zueinander parallele Längskanten (13, 13a, 13b) aufweist.

3. Rotordichtung nach Anspruch 1 oder 2, **dadurch gekennzeichnet, dass** das Faltenband (9) entlang von zueinander parallelen Faltkanten (11) gefaltet ist, und dass die Faltung an zwei benachbarten Faltkanten (11) in entgegengesetzte Richtung erfolgt.

4. Rotordichtung nach einem der vorhergehenden Ansprüche, **dadurch gekennzeichnet, dass** die zwei zueinander parallelen Längskanten (13a, 13b) des Faltenbands (9) und die zueinander parallelen Faltkanten (11) einen Herstellwinkel (β) kleiner 90° einschließen.

5. Rotordichtung nach einem der vorhergehenden Ansprüche, **dadurch gekennzeichnet, dass** in eingebautem Zustand die Faltkanten (11) mit einem von der Rotorachse (21) ausgehenden Radiusstrahl einen Anstellwinkel (γ) zwischen 10° und 70°, besonders bevorzugt zwischen 20° und 45°, einschließen.

6. Rotordichtung nach einem der vorhergehenden Ansprüche, **dadurch gekennzeichnet, dass** im Bereich der Faltkanten (11) ein Schlitz (10) vorgesehen ist, und dass die Tiefe (T) des Schlitzes kleiner als die Breite des Faltenbands (9) ist.

7. Rotordichtung nach einem der vorhergehenden Ansprüche, **dadurch gekennzeichnet, dass** die Rotordichtung (7a) an ihrem dem Dichtspalt abgewandten Ende einen Trägerring (23) aufweist.

8. Rotordichtung nach Anspruch 7, **dadurch gekennzeichnet, dass** der Trägerring (23) eine Dichtlippe (24) aufweist.

9. Rotordichtung nach Anspruch 7 oder 8, **dadurch gekennzeichnet, dass** die Rotordichtung (7a) mit dem Trägerring (23) verlötet, verschweißt oder formschlüßig verbunden ist.

10. Rotordichtung nach einem der vorhergehenden Ansprüche, **dadurch gekennzeichnet, dass** das Faltenband (9) aus einem metallischen Werkstoff besteht.

11. Rotordichtung nach einem der vorhergehenden Ansprüche, **dadurch gekennzeichnet, dass** das Faltenband (9) im Bereich der Faltkanten (11) plastisch verformbar ist, und dass das Faltenband (9) ansonsten federelastisch ist.

12. Rotordichtung nach einem der vorhergehenden Ansprüche, **dadurch gekennzeichnet, dass** das Faltenband (9) im Bereich der Faltkanten (11) weichgeglüht ist.

13. Rotordichtung nach Anspruch 12, **dadurch gekennzeichnet, dass** das Faltenband (9) in gefaltetem Zustand kraftschlüssig, formschlüssig oder stoffschlüssig mit einem Dichtungsträger (5) verbunden ist.

14. Rotordichtung nach einem der vorhergehenden Ansprüche, **dadurch gekennzeichnet, dass** im Bereich der Faltkanten (11) eine Ausnehmung (14, 8a) vorgesehen ist, und dass die Ausnehmung (14, 8a) mit einer entsprechend geformten Ringnut eines Dichtungsträgers (5) formschlüssig verbindbar ist.

15. Rotordichtung nach Anspruch 13 oder 15, **dadurch gekennzeichnet, dass** der Dichtungsträger (5) mehrteilig ist.

16. Rotordichtung nach Anspruch 15, **dadurch gekennzeichnet, dass** die Teilungsebene (17) des Dichtungsträgers (5) im wesentlichen parallel zuden im Bereich der Teilungsebene (17) angeordneten Faltkanten verläuft.

17. Rotordichtung nach einem der Ansprüche 13-16, **dadurch gekennzeichnet, dass** der Dichtungsträger (5) am Gehäuse (1) angeordnet werden kann.

18. Rotordichtung nach einem der Ansprüche 13-16, **dadurch gekennzeichnet, dass** der Dichtungsträger (5) am Rotor (2) angeordnet werden kann.

19. Rotordichtung nach einem der vorhergehenden Ansprüche, **dadurch gekennzeichnet, dass** die Rotordichtung (7a) als Radialdichtung ausgebildet ist.

20. Rotordichtung nach einem der Ansprüche 1-18, **dadurch gekennzeichnet, dass** die Rotordichtung als Axialdichtung ausgebildet ist.

21. Rotordichtung nach einem der vorhergehenden Ansprüche, **dadurch gekennzeichnet, dass** die Rotordichtung aus mehreren Segmenten besteht, und dass jedes Segment aus einem Faltenband (9) gefaltet ist.

## Claims

1. Rotor seal in particular for turbo machines, for sealing a gap existing between a stationary housing (1) and a rotor (2) rotating relative to the housing (1) by means of sealing elements arranged in succession in the peripheral direction of the rotor (2), **characterised in that** several sealing elements (7) are folded from a pleated strip (9), that on folding, fold edges (11) occur and that when the pleated strip (9) is in the fitted state, the fold edges (11) run in a plane lying perpendicular to the rotor axis (21).

2. Rotor seal according to claim 1, **characterised in that** the pleated strip (9) has two long sides (13, 13a, 13b) parallel to each other.

3. Rotor seal according to claim 1 or 2, **characterised in that** the pleated strip (9) is folded along fold edges (11) parallel to each other and that the folding takes place in opposing directions on two adjacent fold edges (11).

4. Rotor seal according to any of the previous claims, **characterised in that** the two parallel long sides (13a, 13b) of the pleated strip (9) and the parallel fold edges (11) enclose a production angle (β) of less than 90°.

5. Rotor seal according to any of the previous claims, **characterised in that** in the fitted state, the fold edges (11) together with a radius beam starting from the rotor axis (21) enclose an angle of attack (γ) between 10° and 70°, particularly preferably between 20° and 45°.

6. Rotor seal according to any of the previous claims, **characterised in that** in the area of the fold edges (11) a slot (10) is provided and that the depth (T) of this slot is less than the width of the pleated strip (9).

7. Rotor seal according to any of the previous claims, **characterised in that** the rotor seal (7a) has on its end facing away from the gap a carrier ring (23).

8. Rotor seal according to claim 7, **characterised in that** the carrier ring (23) has a sealing lip (24).

9. Rotor seal according to claim 7 or 8, **characterised in that** the rotor seal (7a) is soldered, welded or connected by form fit to the carrier ring (23).

10. Rotor seal according to any of the previous claims, **characterised in that** the pleated strip (9) consists of a metal material.

11. Rotor seal according to any of the previous claims, **characterised in that** the pleated strip (9) is plastically deformable in the area of the fold edges (11) and that the pleated strip (9) is otherwise sprung-elastic.

12. Rotor seal according to any of the previous claims, **characterised in that** the pleated strip (9) is soft annealed in the area of the fold edges (11).

13. Rotor seal according to claim 12, **characterised in that** the pleated strip (9) in the folded state is connected by force fit, form fit or material fit with a seal carrier (5).

14. Rotor seal according to any of the previous claims, **characterised in that** in the area of the fold edges (11) a recess (14, 8a) is provided and that the recess (14, 8a) can be connected by form fit with a correspondingly shaped ring groove of a seal carrier (5).

15. Rotor seal according to claim 13 or 15, **characterised in that** the seal carrier (5) is multi-piece.

16. Rotor seal according to claim 15, **characterised in that** the plane of osculation (17) of the seal carrier (5) runs essentially parallel to the fold edges arranged in the area of the plane of osculation (17).

17. Rotor seal according to any of claims 13 to 16, **characterised in that** the seal carrier (5) can be arranged on a housing (1).

18. Rotor seal according to any of claims 13 to 16, **characterised in that** the seal carrier (5) can be arranged on the rotor (2).

19. Rotor seal according to any of the previous claims, **characterised in that** the rotor seal (7a) is formed as a radial seal.

20. Rotor seal according to any of claims 1 to 18, **characterised in that** the rotor seal is formed as an axial seal.

21. Rotor seal according to any of the previous claims, **characterised in that** the rotor seal consists of several segments and that each segment is folded from a pleated strip (9).

## Revendications

1. Garniture d'étanchéité pour rotor, tout particulièrement pour des turbomachines, destinée à rendre étanche un jeu d'étanchéité, présent entre un boîtier stationnaire (1) et un rotor (2) pivotant par rapport au boîtier (1), doté d'éléments d'étanchéité agencés les uns derrière les autres dans la direction de la périphérie du rotor (2), **caractérisée en ce que** plusieurs éléments d'étanchéité (7) d'une bande en accordéon (9) sont pliés, **en ce que** des arrêtes de pliage (11) se forment lors du pliage, et **en ce que** les arrêtes de pliage (11) s'étirent sur un plan vertical par rapport à un axe du rotor (21) lorsque la bande en accordéon (9) est en position encastrée.

2. Garniture d'étanchéité pour rotor selon la revendication 1, **caractérisée en ce que** la bande en accordéon (9) présente deux arrêtes longitudinales (13, 13a, 13b) parallèles l'une par rapport à l'autre.

3. Garniture d'étanchéité pour rotor selon la revendication 1 ou 2, **caractérisée en ce que** la bande en accordéon (9) est pliée le long d'arrêtes de pliage (11) parallèles entre elles, et **en ce que** la pliure est réalisée au niveau de deux arrêtes de pliage voisines (11) dans la direction inverse.

4. Garniture d'étanchéité pour rotor selon l'une des revendications précédentes, **caractérisée en ce que** les deux arrêtes longitudinales parallèles entre elles (13a, 13b) de la bande en accordéon (9) et les deux arrêtes de pliage parallèles entre elles (11) forment un angle de construction (β) inférieur à 90°.

5. Garniture d'étanchéité pour rotor selon l'une des revendications précédentes, **caractérisée en ce que** les arrêtes de pliage (11), lorsqu'elles sont en position encastrée, forment avec un rayon vecteur partant de l'axe du rotor (21) un angle d'attaque (γ) variant entre 10° et 70°, de préférence entre 20° et 45°.

6. Garniture d'étanchéité pour rotor selon l'une des revendications précédentes, **caractérisée en ce qu'**une fente (10) est prévue dans la région des arrêtes de pliage (11), et **en ce que** la profondeur (T) de la fente est inférieure à la largeur de la bande en accordéon (9).

7. Garniture d'étanchéité pour rotor selon l'une des revendications précédentes, **caractérisée en ce que** la garniture d'étanchéité pour rotor (7a) présente un anneau de support (23) au niveau de son extrémité opposée au jeu d'étanchéité.

8. Garniture d'étanchéité pour rotor selon la revendication 7, **caractérisée en ce que** l'anneau de support (23) présente une lèvre d'étanchéité (24).

9. Garniture d'étanchéité pour rotor selon la revendication 7 ou 8, **caractérisée en ce que** la garniture d'étanchéité pour rotor (7a) est attachée à l'anneau de support (23) par brasage, soudage ou coopération des formes.

10. Garniture d'étanchéité pour rotor selon l'une des revendications précédentes, **caractérisée en ce que** la bande en accordéon (9) est fabriquée dans un matériau métallique.

11. Garniture d'étanchéité pour rotor selon l'une des revendications précédentes, **caractérisée en ce que** la bande en accordéon (9) peut être soumise à une déformation plastique dans la région des arrêtes de pliage (11) et **en ce que** la bande en accordéon (9) est déformable dans la partie restante.

12. Garniture d'étanchéité pour rotor selon l'une des revendications précédentes, **caractérisée en ce que** la bande en accordéon (9) a été soumise à un recuit d'adoucissement dans la région des arrêtes de pliage (11).

13. Garniture d'étanchéité pour rotor selon la revendication 12, **caractérisée en ce que** la bande en accordéon (9), lorsqu'elle est pliée, est reliée à un support d'étanchéité (5) sous l'influence d'une force, par coopération des formes ou par adhésion des matériaux.

14. Garniture d'étanchéité pour rotor selon l'une des revendications précédentes, **caractérisée en ce qu'**un creux (14, 8a) est prévu dans la région des arrêtes de pliage (11) et **en ce que** le creux (14, 8a) peut être relié par coopération des formes avec une gorge de retenue d'un support d'étanchéité (5) de forme correspondante.

15. Garniture d'étanchéité pour rotor selon la revendication 13 ou 15, **caractérisée en ce que** le support d'étanchéité (5) est composé de plusieurs pièces.

16. Garniture d'étanchéité pour rotor selon la revendication 15, **caractérisée en ce que** le plan de joint (17) du support d'étanchéité (5) s'étire sensiblement parallèlement aux arrêtes de pliage agencées dans la région du plan de joint (17).

17. Garniture d'étanchéité pour rotor selon l'une des revendications 13-16, **caractérisée en ce que** le support d'étanchéité (5) peut être agencé au niveau du boîtier (1).

18. Garniture d'étanchéité pour rotor selon l'une des revendications 13-16, **caractérisée en ce que** le support d'étanchéité (5) peut être agencé au niveau du rotor (2).

19. Garniture d'étanchéité pour rotor selon l'une des revendications précédentes, **caractérisée en ce que** la garniture d'étanchéité pour rotor (7a) est conçue comme une garniture d'étanchéité radiale.

20. Garniture d'étanchéité pour rotor selon l'une des revendications 1-18, **caractérisée en ce que** la garniture d'étanchéité pour rotor est conçue comme une garniture d'étanchéité axiale.

21. Garniture d'étanchéité pour rotor selon l'une des revendications précédentes, **caractérisée en ce que** la garniture d'étanchéité pour rotor est constituée de plusieurs segments et **en ce que** chaque segment est un pli de la bande en accordéon (9).
